# EUROPEAN PATENT APPLICATION

(11) **EP 2 850 942 A1**
(43) Date of publication of application: **25.03.2015**
(21) Application number: 13734869.4
(22) Date of filing: 09.05.2013
(51) Int. Cl.: A01K 85/14

(54) **HOOK TEASER**

(30) Priority: 09.05.2012 PT 10630612
(71) Applicant: Pereira, Paulo, 2410-057 Leiria (PT)
(72) Inventor: Pereira, Paulo, 2410-057 Leiria (PT)
(74) Representative: Alves Moreira, Pedro
(86) International application number: PCT/PT2013/000029
(87) International publication number: WO 2013/169132

(57) **Abstract**

The present invention refers to a ***Hook Teaser*** for the fishing with softbait, commonly known as "softbait fishing".

The ***Hook Teaser*** is characterized by having a lip (1) of flat and smooth surface, to which a lead weight (11) is added and crossed (lip (1)) on the top and inside by a metal body of circular cross-section (10, 14, 15) with two sockets (10.15), being these sockets (10.15) situated on both ends, giving the lip (1) an oblique angle (7) in relation to the metal body of circular cross-section (10, 14, 15) and giving the hook (5.6) a type of traction in water that causes a more natural motion, identical to that of a live bait and, consequently, causes the movement of the softbait in the water to be more realistic similar to that of live and/or weakened fish.

The ***Hook Teaser*** aims to address the total lack of products to "bring to life" the artificial movement of softbaits used in this type of fishing.

## Description

The present **Hook Teaser** invention targets a very specific type of fishing, known in Portugal as fishing with softbait or commonly referred to as "softbait fishing", a relatively recent practic, therefore more receptive to new inventions and methods. Moreover, the **Hook Teaser** aims to address the complete lack of products that facilitate the artificial movement of new softbaits used in this type of fishing and new to the market.

The action of the ***Hook Teaser*** is simple, when pulled and/or jerked by the fisherman, it causes the lip (1) (made in plastic and/or derivatives, or other light material such as balsa wood) to create resistance in the water and with a weight (11) placed or embedded on its back or inside, properly positioned, the **Hook Teaser** will always remain in the same position in the water, preventing it from moving around and out of control. This set is attached to a metal body of circular cross-section (10, 14, 15) which holds the hook (5 or 6) in the slot (15) and then attaches the softbait to the **Hook Teaser**. All this will make the lip (1) transmit to the softbait a unique vibration, making it look more like real fish than any hard body or soft lure and to this day. The softbait becomes an authentic replica of fish in swimming action, no matter how demanding and winding their movement may be, specially with the spheres (11) incorporated in a small compartment (4) causing additional vibrations/sound which make even more attractive.

Every year there are new "toys" for fishermen, new fishing articles. In the beggining of 2012 a respected brand of fishing equipment, Savage Gear, released a vinyl softbait ( http://www.savage-gear.com/ecatalogue/SavageGearEbook/flash.html#/37/ ,page no. 37, the LB Sand Eel) that however does not yet have an accessory to make use of its full potential. On the same page there are suggestions of possible assemblings of these softbaits and nothing comes close to the ***Hook Teaser*** invention. "Softbait fishing" consists of constantly casting the artificial bait into the water (either in river, sea, Lake or estuary) and immediately jerking it as the fisherman finds suitable. This type of fishing has gained many fans in recent years because it has been shown to be very efficient and producing good catptures, making it very adictive.

There are various styles of "lure fishing": the ultra-lightweight, light, medium, heavy and Extra heavy. These styles are defined by the weight that lures/softbaits may have, in other words, it is the weight of lures/softbaits that defines each category. This invention can be used in any of these categories of fishing, by using it in different ways. In the simplest mode, with only the **Hook Teaser** and/or hook extender (3) and hook (5.6), it would be fit to the the ultra-lightweight category of "lure fishing" and with the addition of other fishing accessories such as lead weights, metal plates, jig heads, bullets or other weights, as the fisherman chooses, it becomes adaptable to the other different categories of "lure fishing" with eel type vinyl lures/ or sand eels, that are slender, long and new on the market. Moreover, this invention may also be used with to "normal" lures as long as they have a vertical tail like a natural fish. This shows how wide the range of applications can be, as opposed to a "normal" lure that the larger and denser the heavier, meaning that when casting it can cause more friction in the air and thus not reach as far.

Internationally, this type of fishing is subdivided into two large groups, the hard bodied and the soft artificial lures, being better known as lures and softbait lures, respectively.

The latter, the softbait fishing that is even more recent in portugal than the hard body lure fishing, is the main target of this invention, particularly softbaits with round long end tails (cone like) or with the vertical tail (generally speaking), since much of the existing softbaits have their tail flattened in perpendicular to the body and are not long and slender, which is what ends up giving movement to the body when jerked. Softbait fishing is also a more versatile kind of fishing, since softbails allow working both the bottom and the middle layer of water.

In the beginning of the year of 2012, as mentioned above, a well known brand, the SAVAGE GEAR, released the LB Sand Eel, but the first softbaits of this kind to appear on the market were the Jig Chasers of trademark Hiro about three/four years ago and more or less simultaneously the Sand Eel Pro brand Storm. When these three brands released these three new softbaits, they failed to launch any new suitable accessory to help working them to their potential. The brands simply launched the softbaits without any specific movement accessory, leaving that to the already available accessories, which, with some changes could be adapted.

Softbaits, being soft, must be jerked properly, in three main kinds of movement: intense, provoked by moving the tip of the cane tip or simply with continuous and interrupted recoveries with short breaks in order to provoque movement as identical as possible to the behavior of a prey fish swimming with difficulty, injured or disoriented, because only in this way can we stimulate the attack of predatory fish.

The essence of this invention is to allow, with one simple element - the **Hook Teaser**, rather than with complicated systems of transfers of Pistons, springs, spheres with magnets, etc., to give movement to the softbait with the highest level of detail possible.

This accessory can provide answers to five situations: replacing the hook (5.6), replacing the **Hook Teaser** (if damaged), attracting the fish through vibration/sound (4), extending the hook (5.6) further back in the softbait body with the hook extender (3) (increasing the possibility of hooking the fish) and the correct electrifying animation of the softbait. There is still no specific kind of accessory/part to produce an electrifying movement, thus, the essence of this invention is its simplicity associated with its effectiveness and mobility. Just like some brands have created the "new" type of sand Eel softbait, this new and creative invention appears to give them the needed movement, making the **Hook Teaser** an innovation and invention that is appropriate to a prodcut that is new to the market, yet to be developed and thus opening ways to a whole new level, a new range of entirely new articles and that although aimed to the long softbaits, can also be used in other lures with vertical tail.

### Previous technique

The present invention *Hook Teaser,* an innovation in an area that, at the moment, is almost non-existent and limited of "softbait fishing": the use of long softbaits. There is a large number of accessories to try to make lures move as required, ranging from jig heads with different shapes and forms, their rigs, circle hooks that improve the positioning and securing of softbait, plastic vinyl heads, spring type wire to screw to the softbait in order to have a better grip, hook shaped wire bullet weights, all to maximize the grip and later the movement. Nevertheless, there is not yet a viable solution for the correct animation of a new softbait, "LB Sand Eel of Savage Gear or" Chaser "Jig of Hiro, because of its long slender body which makes it hard to grip and move. Because this softbait is still new to the market, it only has to date, one article designed for its animation, the Picol'eau of the brand Delalande (French).

### Advantageous Effects of Invention:

The present invention ***Hook Teaser,*** brings great advantages to this kind of fishing (fishing with long softbaits), because to date there is no alternative system which can be completely disassembed and with lip (1) to equip with a single hook (6) or the bass fishing hook (5), meaning that with this system, the fisherman can change ***Hook Teaser*** if damanged, or change it for another ***Hook Teaser*** with the lip (1) of a different form for a different jerking technique or simply to sink more or because the hook (5.6) or the extender of the hook (3) becomes rusty.

The fisherman may also want to change the hook (5.6) to a hook (5.6) of lesser curvature or vice versa in order to adapt to the kind of fishing place, to avoid loss of material or in case the chosen place has many algae or rocks and the situation requires a hook (5.6) of lesser curvature to minimize the possibility of being stuck.

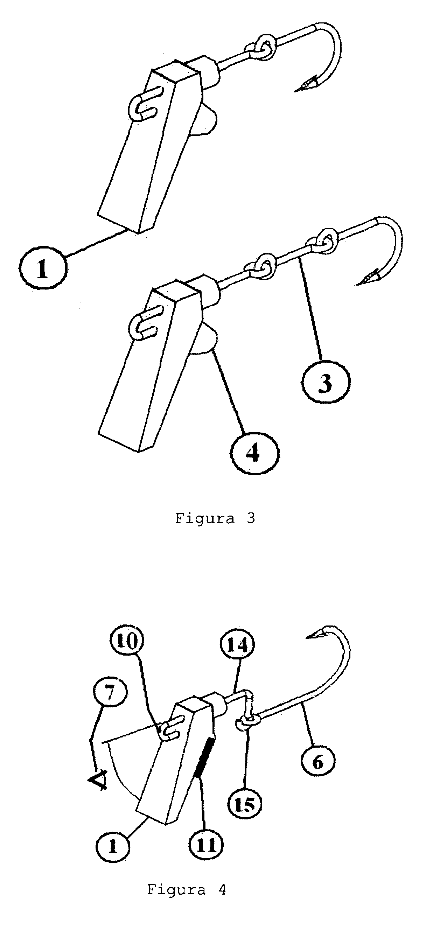

The fisherman can also choose a longer or shorter hook (5.6) 1, which is another great advantage, but, even more advantageous is the fact that length can be adjusted to accommodate the hook (5.6) through the addition or removal of an extra hook extender (3), meaning that another simple hook extender can be added (3) in addiction to the ***Hook Teaser,*** "chain" like (fig. 3 bottom image), and hook (6) at the end. In the assembly only with hook (5.6), the fisherman can also fit the hook (5.6) to his liking, face down, face up, long, short, big or small, all of this depending on the wanted result, and can also cut the head to softbait if wanted, because as the ***Hook Teaser*** can have the form of a fish head (9) with eyes (13) which can compensate the removal of the softbait head with the intention reducing its size (softbait).

In terms of what already exists on the market, there is currently nothing like this ***Hook Teaser.*** There are Jig head systems with fixed hook which by being fixed, limit the fisherman's position and the durability of the hook, and in turn make the jig head useless if hook becomes rusty. Recently lead jig heads have been put on the market with detachable hook, but being lead, heavier and without lip or body to grip the softbait, cannot work close to the surface of the water where the large predators can often be found.

Another possible application is when fishing with fishing floats/buldos/lead weights, the so-called spin fishing. In this kind of fishing, which consists (in the case of the fishing floats) to simply cast the foat with the wanted weight (usually 60-80g) and slowly pull the float, a single hook with this ***Hook Teaser*** and a softbait can be easily used. The ***Hook Teaser*** will be atached to the end of the line that goes from the float to the ***Hook Teaser*** with about three feet in length.

This invention can also be used when spin fishing by boat, being that with the boat at rest or in motion. With the boat still, due to the ***Hook Teaser's*** versatility, it is possible to make a Texas style assembly that consists in placing a lead weigth (Bullet type) on the line, which by being loose on the line will be pushed close to the **Hook Teaser** when casting wich allows a further casting, and by hitting the wather will sink only the desired lenght, then to be jerked by the fisherman.

For shore fishing, in sand or rock, this **Hook Teaser** can be assembled to the METAL PLATE, in such way as to allow reaching distances never achieved with any hard bodied lure, nor softbait. A "normal" softbait attached to a metal plate would not work correctly because when pulled its position does not hold, instead it comes stumbling, in addition to being more bulky and hampering the casting.

The ***Hook Teaser*** brings the biggest advantages for fresh water fishing, namely for Bass, Pike, Pike Perch, and Perch because in still water movements can be defined in more detail, without the need for any additional weight when casting. When using different forms of lips (1) one can get at least two versions of distinct movements, one faster with -shorter electrfying waves, and the other with more pronounced movement, less winding and consequently slower which again prooves how versatile this invention is. If the fish happen to be less active a lip(1) can be used to provoque slower more pronounced movement, if they happen to be more active one can change ***Hook Teaser*** to one producing more vibrations in the water and causing a quicker movement.

Also for fresh water fishing, one can apply all other equipment options of ***Hook Teaser,*** as refered abbove above (bullet, float, lead weights, jig head and metal plate). Once again this shows how versatile and multifunctional the ***Hook Teaser*** is.

*The fisherman can assemble the **Hook Teaser** and the hook as desired, not being limited to a single option, allowing the flow of creativity and perhaps motivating the discovery of some assembling system that can be more efficient in attracting predatory fish.*

### Description of drawings:

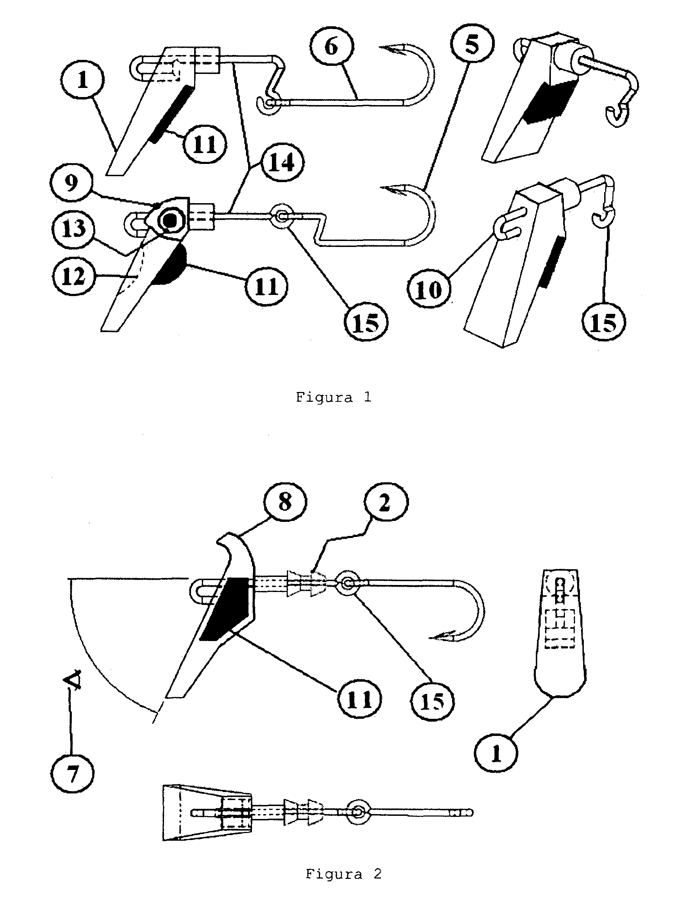

Fig. 1- Contains four images of the ***Hook Teaser,*** two side views on the left, which show, on the upper image, a ***Hook Teaser*** with an angle on the metallic body of circular cross-section (10, 14, 15) located between the mid section (14) and its socket (15), to which a softbaid can be added, i.e. this angle can accomodate the bait, in the same image a hook (6) fitted to the socket (15), on the opposing side the metallic body of circular cross-section (10, 14, 15) which has another sort of socket (10) to connect to the fishing line coming from the rod, and also the weight (11) attached to the back of the lip(1). On the side view of the ***Hook Teaser,*** under the above mentioned figure, we can see the rigtht side of the metallic body of circular cross-section (10, 14, 15) of the ***Hook Teaser*** in its mid section (14) which allows the use of a hook for bass (5), namely, fresh water fishing and again the weight (11) on the back of the lip (1), showing also that the ***Hook Teaser*** may have on the top of the lip (1) the shape of a fish head (9) with eyes (13). Still in the same image, we can also see a small scoop (12), in this case partial, of the "flat" frontal surface of the lip(1) but that could be total (concave surface), and also two isometric views of the ***Hook Teaser,*** the upper showing the ***Hook Teaser*** from behind, the lower with the front with references to their sockets (10.15), the frontal one (10) that will hold the line that comes from our rod and socket (15) which will accommodate the hook (6).
**Fig. 2****-** Contains three images of ***Animator for Hook**,* in the upper left image, a side view showing the weight (11) that can be embedded inside the lip (1) of the ***Hook Teaser,*** injected directly into the metallic body of circular cross-section (10, 14, 15), it also shows one of the oblique angles (7) that the lip (1) may have, and a possible rear body with attachements (2) for the lure and the lip extension upwards (8) with concave format but which may have other shapes, sizes and formats. We can also see the assembling of a hook (6) turned downwards and fit to the slot (15), in this image already tighten in the socket (15) (closed) with pliers. The lower image is a view of the top for mere information. The right side image is a frontal view highlighting the possibilty of the outline and shape of lip (1) being non-rectilinear.
**Fig. 3**- Contains two isometric views, the top image showing us the hook assembly, with the hook (6) facing downwards highlighting the lip (1). In the isometric view bellow, we can see an assemby with a hook extender (3) next to the ***Hook Teaser*** and at the end of the hook assemby (6), also turned downwards.
**Fig. 4****-** Contains an isometric view of the ***Hook Teaser*** with a hook (6) assembled to the socket (15) in an open ring (later closed with pliers), also shows the metallic body of circular cross-section (10, 14, 15), the socket (10) on the front of the lip (1) (10) which will hold the line that comes from the rod, and finally, the oblique angle (7) between the metallic body of circular cross-section (10, 14, 15) and the lip (1).

### Industrial Applicability

If using plastic for producing the ***Hook Teaser,*** the process consists in the injection of the piece (lip (1)) directly on the metal body of circular cross-section (10, 14, 15) to which will be added later (glued manually or not) the weight (11), this being, when togehter (1, 10, 11, 14 and 15), one of the possible combinations of ***Hook Teaser.***

Another form of manufacture is the injection of lead weight (11) into the metallic body of circular cross-section (10, 14, 15), which once injected forms another of the possible combinatios (10, 11, 14 and 15), to be applied (10, 11, 14 and 15) on a plastic injection mold properly engineered to inject plastic around the lead weight (11) and metallic body part of circular cross-section (10, 14.15).

This invention can be produced through a plastic injection mould, because the inventor is a creative and experienced mould designer, and thus an expert in the area.

The ***Hook Teaser*** can be produced on a large scale with a mold that can go from two cavities up to twenty or more cavities, all this depending on market study and the assessed market feasibility.

## Claims

1. st- ***Hook Teaser,* characterized by** a flat lip (1) and smooth surface, to which a weight (11) is added, and crossed at its top and inwardly by a metal body of circular cross-section (10, 14, 15) with two sockets (10.15) located at both ends, making the lip (1) oblique (7) in relation to the metal body of circular cross-section (10, 14, 15).

2. nd- ***Hook Teaser,*** according to claim 1, **characterised by** the possibilty of the surface of the lip being fully or partially concave (12).

3. rd- ***Hook Teaser,*** according to claim 1 St and 2nd, **characterized by** the shape of the lip (1) being possible in a non rectilinear shape.

4. th- ***Hook Teaser,*** according to claim 1st, 2nd and 3rd, **characterized by** having an extension of the lip (1) to its upper part (8), concave or other.

5. th- ***Hook Teaser,*** according to claim 1st, 2nd, 3rd and 4th, on the front and on the top of the lip (1), taking the form of a fish head (9), with or without eye (s) (13).

6. th- ***Hook Teaser,*** according to claim 1st, 2nd, 3rd, 4th and 5th, **characterized by** metallic body of circular cross-section (10, 14, 15) which can take forms other than rectilinear and settings other than those referred to in 1st.

7. th- ***Hook Teaser,*** according to claims 1st, 2nd, 3rd, 4th, 5th and 6th, **characterized by** being able to be crossed by a non-metallic body and of non-circular cross-section, assuming shapes and configurations other than those referred to in 1st and 2nd.

8. th- ***animator for hook,*** according to claim 1st, 2nd, 3rd, 4th, 5th, 6th and 7th, **characterized by** having an elongated cylindrical body in the back of the lip with attachement system (2).

9. th- ***animator for hook,*** according to claim 1st, 2nd, 3rd, 4th, 5th, 6th, 7th and 8th **characterized by** having a compartment (4) inside where one or more loose lead weights can be placed with the purpose of producing sound or vibration.
